# EUROPÄISCHE PATENTANMELDUNG

(11) **EP 1 997 959 A2**
(43) Veröffentlichungstag der Anmeldung: **03.12.2008**
(21) Anmeldenummer: 08009924.5
(22) Anmeldetag: 30.05.2008
(51) Int. Cl.: E02D 3/10, C09K 17/02

(54) **Mischung aus Schichtmineralien**

(30) Priorität: 30.05.2007 DE 102007025284
(71) Anmelder: Schneider, Erika, 04838 Zschepplin / OT Naundorf (DE)
(72) Erfinder: Stolzenburg, Olaf, 04838 Eilenburg (DE)
(74) Vertreter: Kailuweit, Frank

(57) **Zusammenfassung**

Die Erfindung betrifft eine Mischung (Compound) aus Schichtmineralien, bestehend aus einen oder mehreren künstlichen oder natürlich vorkommenden Schichtmineralien für die Herstellung eines zeitweise fließfähig eingestellten Baustoffs. Der innovative Baustoff findet insbesondere im Tiefbau, z. B. bei der Verfüllung von Rohreitungsgräben und Kanälen, im Wasserbau oder bei der Sanierung von Dämmen und Deichen Verwendung. Die Erfindungsgemäße Mischung besteht aus mindestens zwei Schichtmineralien, die aufgrund ihres unterschiedlichen Bindungsverhaltens in ihren Strukturen an- und einlagerbare Wassermengen dauerhaft stabil zu einem Zeitpunkt so binden, dass das zeitweise fließfähige Material gezielt rückverfestigt, ohne dazu geschlossene, starre Strukturen, z. B. durch Zugabe hydraulischer Bindemittel oder deren Derivate zu benötigen.

## Beschreibung

Die Erfindung betrifft eine Mischung (Compound) aus Schichtmineralien, bestehend aus einem oder mehreren künstlichen oder natürlich vorkommenden Schichtmineralien für die Herstellung eines zeitweise fließfähig eingestellten Baustoffs.
Zeitweise fließfähig eingestellte Baustoffe finden insbesondere im Tiefbau, z. B. bei der Verfüllung von Rohrleitungsgräben und Kanälen, im Wasserbau oder bei der Sanierung von Dämmen und Deichen Verwendung.

Unter Schichtmineralien werden im Sinne dieser Anmeldung alle natürlich vorkommenden oder industriell hergestellten, mehrschichtigen Mineralien verstanden, die geeignet sind, ein Komgemenge, wie beispielsweise einen natürlich vorkommenden Erdstoff mit seinen unterschiedlichen Charakteristika, Zusammensetzungen und unterschiedlichen Einwirkungen durch seine natürliche Umgebung, mit dem das Material vorher vermischt wurde, bei Zugabe von Wasser in exakt vorher berechneter Menge, zeitweise in einen fließfähigen und damit technologisch optimal verarbeitbaren Zustand zu bringen und danach, ohne zwingende Entstehung geschlossener und damit fester, starrer Strukturen von Bindemitteln (z.B. hydraulische Bindemittel, Kalk, Gips etc.) oder deren Derivate und Mischprodukte, wie beispielhaft Mischbinder hauptsächlich über die dauerhaft stabile Wasseranlagerung an die Strukturen der Schichtmineralien wieder rückverfestigen zu können.

Dadurch bleiben zum einen die bodenmechanisch relevanten physikalischen Eigenschaften des urspünglichen Bodens weitestgehend erhalten oder können determiniert verändert werden, so dass bautechnische Anforderungen gezielt erfüllt werden können. Die Erfindung betrifft daneben ein Verfahren zur Herstellung der Mischung und zu seiner Verwendung.

Aus dem Stand der Technik sind der Einsatz von Materialien und die dazugehörigen Technologien bekannt, die eine zeitweise Fließfähigkeit von Sanden, sandigen Materialien und anderen Korngemischen mit meist weitgehend homogener Verteilung der Sieblinie und deren Rückverfestigung auf der Basis geschlossener und starrer Strukturen hydraulischer Bindemittel ermöglichen. Derartige Materialien haben Grenzen hinsichtlich der Korngemische, die mit ihnen verarbeitet werden können und ihrer technologisch relevanten Endeigenschaften. Beispielhaft können bei Nutzung des Standes der Technik keine stark tonhaltigen Korngemische oder humin belastete Böden für die Herstellung zeitweise fließfähiger Materialien mit anschließend definierter Rückverfestigung verwendet werden, ohne dass sich Eigenschaften ändern oder ungewollte Erscheinungen, wie Risse, fehlende Tragfähigkeit, Volumenverluste und damit verbundene Schwindungen oder ungeplant hohe Festigkeiten oder Nachverfestigungen oder ungewollte technologische Wirkungen, wie verlangsamte bis ausbleibende Festigkeitsbildung und daraus resultierende nachteilige Wirkungen auf die bauliche Funktion des rückverfestigten Materials eintreten.

Auf Grund fehlender Kenntnisse der funktionalen Abläufe, die zu einer Rückverfestigung ohne den Einsatz fester starrer Strukturen, beispielhaft hydraulischer Bindemittel oder deren Derivate und Mischprodukte führen können, wurden bisher, dem Stand der Technik entsprechend, nur Materialien und Technologien verwendet, die eine Trennung der Funktionalität der Plastifizierung (d. h. Herstellung zeitweiser Fließfähigkeit) und der Rückverfestigung zur Folge hatten.

Der Prozess der Rückverfestigung wurde nur als eine Wirkung des Wasserentzuges, z. B. durch Drainage, Verdunstung, Absetzen etc. und/oder die Herstellung starrer Strukturen (z. B. hydraulischer Bindemittel und deren Derivate und Mischprodukte) verstanden.
Damit war man nicht in der Lage, die erforderliche Masse des für die zeitweise Fließfähigkeit temporär notwendigen Wassers in der rückverfestigten Masse dauerhaft so zu binden, dass die Eigenschaften des Ausgangsmaterials erhalten oder gezielt beeinflusst werden können, ohne dass es schädigende Wirkungen auf die Endeigenschaften des rückverfestigten Materials oder technologisch für den Verarbeitungsprozess relevante Eigenschaften gibt.

Somit war die Grenze der Nutzung solcher Methoden und Stoffe dort erreicht, wo die verwendeten Korngemische eine solch hohe wassersperrende Wirkung und/oder Wasserretention besitzen (z. B. tonige Böden), dass das überschüssige Wasser nicht mehr drainieren oder verdunsten kann und somit in den Strukturen des plastifizierten Materials lange verbleibt oder wo die Inhaltsstoffe des Ausgangsmaterials auf die hydraulischen Bindemittel bzw. deren Derivate und Mischprodukte so einwirken, dass sich die, zur Rückverfestigung bei solchen Materialien nötigen geschlossenen bzw. starren Strukturen der hydraulischen Bindemittel bzw. deren Denvate und Mischprodukte, nicht mehr bilden können, wie beispielhaft beim Vorhandensein huminer Bodeninhaltsstoffe, die zu einem für hydraulische Bindemittel und deren Derivate und Mischprodukte ungünstigen sauren Milieu führen und damit die Bildung der, für diesen Weg der Rückverfestigung nötigen starren Strukturen der genannten Bindemittel be- oder verhindern.

Daher führt die Verwendung bekannter Gemische, die dem Stand der Technik entsprechen, zu einem, infolge unbekannter bzw. unplanbarer äußerer Einflüsse, wie z. B. bei stark salzhaltigen Böden als Folge des Winterdienstes oder von Wasser mit hohem Anteil an Metallionen oder von vor Ort vorhandenen huminen Bodeninhaltsstoffen zu einem unkontrolliert verlaufenden Prozess der Rückverfestigung des zeitweise fließfähigen Materials und somit in diesen Fällen zu oft ungewollten Endeigenschaften. Dies sind beispielhaft viel zu hohe Festigkeiten und damit Schwingungsübertragung aus den dynamischen Lasten des Straßenverkehrs, was zu verkürzter Lebensdauer z. B. von erdverlegten Rohren als Folge höherer und häufigerer Spitzenspannungen im plastischen Bereich der Rohrmaterialien fübrt.
Technologisch nachteilige Eigenschaften, wie beispielhaft eine zu langsame Rückverfestigung, erfordert wiederum statische Schutzmaßnahmen, wie z. B. den längeren Einsatz eines Verbaues. In Einzelfällen kommt es zum Wegfall der Rückverfestigung, wie z. B. unter Einwirkung huminer Inhaltsstoffe.
Daneben führen die geschilderten starren steifen Strukturen hydraulischer Bindemittel bzw. deren Derivate und Mischprodukte auch zu einem für die Lebensdauer der in das rückverfestigte Material eingebauten Rohrmaterialien nachteiligen Verhalten dieses Materials, z. B. durch sich ausbildende Schwingersysteme, bestehend aus Rohrmaterial und umhüllendem Material, oder durch die stärkeren Spitzenspannungen im Bereich der Rohre als Folge des dynamischen Lasteintrages aus dem Straßenverkehr.

Aufgabe der Erfindung ist es, die zuvor genannten Nachteile des Standes der Technik zu beseitigen und eine Mischung vorzuschlagen, die eine gezielte Steuerung des Prozesses der Plastifizierung/Herstellung der Fließfähigkeit und der Rückverfestigung mit definierten Endeigenschaften des verfestigten Baustoffes/Bodens zu ermöglichen. Insbesondere soll die Mischung auch bei weitgehend unbekannten äußeren Bedingungen der jeweiligen Einbaustelle (Vorhandensein huminer und anderer Inhaltsstoffe des Ausgangsmaterials, im Boden enthaltene Menge des für die Herstellung der zeitweisen Fließfähigkeit benötigten Wassers) einsetzbar sein und eine gezielte Beeinflussung bautechnisch relevanter Eigenschaften des rückverfestigten Baustoffes ermöglichen. Das Gemisch soll zudem absolut Umweltunbedenklichkeit sein, um den Forderungen der aktuellen Umweltgesetzgebung zu entsprechen und Boden und Grundwasser vor jeglichen Formen der Verunreinigung zu schützen.

Erfindungsgemäß wird die Aufgabe gelöst durch die kennzeichnenden Merkmale des Hauptanspruchs. Vorzugsweise Weiterbildungen der Mischung (Compound) aus Schichtmineralien sind Gegenstand rückbezogener Unteransprüche. Ein Verfahren zur Herstellung und zur Verwendung der Mischung betreffen gesonderte Unteransprüche.

Die erfindungsgemäße Mischung (Compound) besteht aus mindestens zwei Schichtmineralien mit definierten Eigenschaften und definierter Teilchengröße, die aufgrund ihres unterschiedlichen Bindungsverhaltens in ihren Strukturen an- und einlagerbaren Wassermengen dauerhaft stabil zu einem Zeitpunkt so binden, dass das zeitweise fließfähige Material gezielt rückverfestigt, ohne dazu geschlossene, starre Strukturen (wie z. B. durch Zugabe hydraulischer Bindemittel oder deren Derivate) zu benötigen.
Damit verläuft der Prozess der Rückverfestigung ohne Einfluss auf die bodenmechanisch relevanten physikalischer Eigenschaften des rürkverfestigten Korngemisches, beispielhaft seine Festigkeit oder sein Volumen auszuüben, wenn dies nicht gezielt gewollt ist.

Die erfindungsgemäße Mischung aus Schichtmineralien ermöglicht ohne Einfluss durch die jeweiligen Bodeninhaltsstoffe der unmittelbaren Umgebung des Einbauortes, des verwendeten Wassers usw. die gezielte Rückverfestigung mit den technisch bzw. technologisch gewollten Endeigenschaften, unabhängig von der Art des, für seine Herstellung genutzten Komgemisches, in der Regel also Bodens jeder Art, Zusammensetzung und Konsistenz.

Ein wesentlicher Vorteil der innovativen Mischung gegenüber dem Stand der Technik besteht in der Volumenkonstant der damit hergestellten Baustoffe und der daraus resultierenden Verhinderung von Schwindungen und Setzungerscheinungen.

Die Schichtmineralien können dabei einen natürlichen Ursprung besitzen, verschiedenen natürlichen Ursprungs sein oder synthetischen hergestellt sein Besonders bevorzugt werden Mischungen eingesetzt, die aus natürlich vorkommenden Schichtmineralien, wie Attapulgite, Paligordkite oder Illite bestehen, die aufgrund Ihres kristalinen Aufbaus und ihrer Genese und der Aufbereitung (z. B. Partikelgröße) Wasser unterschiedlich schnell anlagern können.

Besonders vorteilhaft werden Mischungen aus natürlichen Schichtmineralien durch mechanischen Eintrag von Knetenergie aufbereitet. In einer gleichfalls bevorzugten Variante werden Mischungen aus natürlichen Schichtmineralien unter Zugabe von Soda einer Natrium- oder Lithium-Aktivierung unterzogen, durch die die Eigenschaften gezielt verändert und optimiert werden. So kann insbesondere die Bindungsfähigkeit gegenüber Wasser und/oder anderen Stoffen maximiert werden Dies erfolgt zum Beispiel durch die Natrium-oder Lithium-Aktivierung von Kalziumbentoniten sein. Dabei findet bei einem Wassergehalt zwischen 5% und 70% bei Zugabe von Soda und unter Eintrag von Knetenergie ein Ionenaustauschprozess statt. Die entstehende Mischung kann eine bis zu 7-fache Wassermenge im Vergleich zum Ausgangsmaterial (nicht aktivierter Kalziumbentonit) aufnehmen. Ebenso kann durch bekannte technologische Prozesse, wie eine Vermahlung (unterschiedliche Korngröße) und Trocknung (Temperatur, Dauer, Restfeuchte) das Gesamtpotential und die Geschwindigkeit der Wasseraufnahme der Mischung bzw. des daraus hergestellten Baustoffes vorteilhaft beeinflusst werden.

Vorzugsweise werden Mischungen verwendet, deren Schichtmineralien ausschließlich aus eines einzigen natürlichen Vorkommen stammen. Die unterschiedliche Wasseraufnahme kann z.B. über die Mahlfeinheit (Partikelgröße) der Mineralien gesteuert werden. Die Geschwindigkeit der Wasseraufnahme wird durch das Verhältnis der Größe der Kristalle zu der Größe der durch Vermahlung zerkleinerten Agglomerate bestimmt.

Vorteilhaft werden ebenso Schichtmineralien unterschiedlichen natürlichen Ursprungs verwendet. Die unterschiedliche Wasseraufnahme wird beispielsweise durch die Genese der Schichtminerale bestimmt. Schichtminerale aus Sekundärlagerstätten (nach der Kristallisation durch Erosion verlagert) nehmen Wasser schneller auf als Minerale, deren Lagerstätten durch Auflast (z. B. eiszeitliche Gletscher) konsolidiert wurden.

In einer gleichfalls bevorzugten Form werden als Schichtmineralien ausschließlich synthetisch hergestellte Schichtmineralien verwendet. Dabei kann es sich z. B. um einen synthetischen Hektorit (Produktname z. B. Optigel SH) handeln. Synthetische Produkte weisen vorteilhaft exakt definierte Inhaltsstoffe auf. Das ist notwendig, wenn der Nachweis der chemischen Zusammensetzung des Korngemenges (Baustoffes), das temporär fließfähig sein soll, von besonderer Bedeutung ist (z. B. bei schadstoffbelasteten Böden oder beim Einsatz der Mischung in Trinkwasserschutzgebieten).

In einer weiteren, gleichfalls bevorzugten Form werden mehrere Arten verschiedener synthetisch hergestellter Schichtmineralien verwendet. Dadurch ist vorteihaft eine genaue Steuerung des zeitlichen Ablaufs des Prozesses der Einstellung der Fließfähigkeit und der Wiederverfestigung möglich, da unterschiedliche zeitliche und volumenmäßige Wasseraufnahmekapazitäten genutzt werden können.

Die Schichtmineralien können optional mit anderen Stoffen so vermischt werden, so dass das Endprodukt nach Rückverfestigung des zeitweise in fließfähige Form gebrachten Korngemisches in seinen Eigenschaften gezielt verändert wird, um z. B. die Wasserdurchlässigkeit, die Wärmedämmung, das Schwingungsverhalten oder die Quellfähigkeit zu ändern.

In einer gleichfalls bevorzugten Ausgestaltung wird der Mischung ein umweltunbedenkliches [gemäß Allgemeiner Verwaltungsvorschrift wassergefährdender Stoffe (VwVwS) vom 27.07.2005 als nicht oder schwach wassergefährdend eingestuft] Material als Beschleuniger zugesetzt, das beschleunigend auf den Prozess der dauerhaft stabilen Wasseranlagerung wirkt. Als Beschleuniger wird beispielhaft ein Bindemittel mit definiertem Hydratationsverlauf, wie ein Zement CEM I 52,5 R oder ein Polacrylamid eingesetzt, die den Prozess der Verfestigung des Baustoffes forcieren.

In einer weiteren, gleichfalls bevorzugten Ausgestaltung wird der Mischung ein umweltunbedenkliches Material zugegeben, durch das eine oder mehrere bautechnisch relevante, physikalische Eigenschaften gezielt verändert werden.
So wird durch die Zugabe von Kaolinmehl die Wasserdurchlässigkeit vorteilhaft reduziert.
Durch die bevorzugte Zugabe von Schaumglasgranlat zur Mischung wird die Wärmedämmung verbessert.
Durch die vorteilhafte Zugabe von BaSO₄ wir die Wichte der Mischung bzw. des Baustoffes gezielt erhöht.
Durch die Zugabe von Metallpulver zur Mischung kann die Wärmeableitung gezielt verbessert werden.

Durch die Zugabe der genannten Materialien und Beschleuniger verfügt der rückverfestigte Baustoff/Boden über verbesserte bautechnische Eigenschaften als das Ausgangsmaterial (in der Regel der vor Ort vorkommende Bodenaushub).

Der Herstellungsprozess der Mischung aus Schichtmineralien kann dabei dafür genutzt werden, um die Anlagerungsfähigkeit von Wasser und anderen Stoffen, die sich durch elektrostatische Anlagerungsvorgänge dauerhaft fest binden lassen, so zu optimieren, dass über das geänderte Bindungsverhalten der bindungsaktiven Flächen der Schichtmineralien (z. B. durch Veränderung des Verhältnisses der Flächenladungen zu den Ladungen der Seiten der Schichtsilikate) zum einen auch bei dichten und damit tonhaltigen, schluffigen Bodenarten die notwendige Volumenkonstanz trotz des hohen Zugabewasseranteils und der fehlenden Drainagewirkung dieser Böden und Korngemische erreicht wird und zum anderen solche Mischungen auch dafür eingesetzt werden können, um die im Boden bzw. dem Korngemisch vorkommende Kontaminationen dauerhaft stabil (im Sinne der Abfallverzeichnisverordnung) zu binden und so Gefahren für Boden und Grundwasser erfolgreich ausschließen zu können.

Zur Steuerung des zeitlichen Verlaufes der Rückverfestigung der zeitweise fließfähigen Komgemische kann optional zusätzlich ein Beschleuniger verwendet werden, der schneller als die eingesetzten Schichtmineralien einen minimalen Teil des zugegebenen Wassers zu einem definierten Zeitpunkt - und zwar nach dem Erreichen der endgültigen Einbauposition des zeitweise fließfähigen Materials - ebenfalls dauerhaft stabil bindet, ohne dass die ungewollten starren Strukturen bekannter Verfahren mit hydraulischen Bindemitteln bzw. deren Derivaten oder Mischprodukten entstehen.

Geeignet sind dafür Materialien mit definiertem Wasserbindeverhalten, wie beispielhaft ein, als Beschleuniger fungierendes Bindemittel mit gezieltem Hydratationsverlauf, wodurch garantiert wird, dass die Hydratationfähigkeit des Materials im Bereich absoluten Wasserüberschusses ausgeschöpft wird und sich so keine starren, geschlossenen Strukturen von CSH- oder CAH-Phasen bilden können. Ebenso geeignet sind Materialien mit gleichen bzw. ähnlichen Eigenschaften bezüglich der zeitlich gesteuerten, dauerhaft stabilen Bindung einer definierten Teilmenge des zugegebenen Wassers mit der Wirkung, dass sich dadurch die für die Fließfähigkeit benötigten Gleitschichten zwischen den Bodenpartikeln zu einem definierten Zeitpunkt rückbilden und das Material über die dann wieder an den Berührungspunkten der Bodenpartikel wirksamen Reibkräfte seine Fließfähigkeit in einem relativ kurzen Zeitraum (vom stabilen Endzustand am Einbringort) von etwa zehn bis zwanzig Minuten verliert.

Um gezielt Endeigenschaften des zeitweise fließfähigen Korngemisches entsprechend der jeweiligen baulichen Aufgabenstellungen verändern zu können, werden nach einer Beprobung der Mischung oder dem Gemisch aus Korngemischen und der innovativen Mischung weitere Materialien zugegeben. So wird z. B. durch den Zusatz mineralischer Materialien, wie Gesteinsstäube, die Sieblinie des Materials so verändert, dass eine höhere Dichte und eine geänderte Wasserdurchlässigkeit erreicht wird.

Ein weiterer Vorteil der innovativen Mischung besteht darin, dass die Mischung langzeitstabil gelagert und somit gepuffert werden kann. Das ist insbesondere in mechanischen Anlagen für die Herstellung der zeitweisen Fließfähigkeit beliebiger Aushubböden und ähnlicher Materialien bzw. Korngemische beliebiger Art von Vorteil, wo die aufbereitet Mischung dauerhaft und stabil gelagert werden kann, ohne seine Eigenschaften und Wirkungen auf die vorhandenen Korngemische, in der Regel Boden verschiedenster Art, zu verlieren.
So weisen z. B. bestimmte Natriummontmorillionite aufgrund ihrer Aufbereitung und Genese eine geringe Neigung zum Ionenaustauch mit den Ca- Kationen von Zement auf. Dadurch können größere Mengen der Mischung in industriellen Anlagen vorgemischt und gelagert werden.

Vorteilhaft wird Mischung in einem Prozess der Verarbeitung rieselfähiger Korngemische eingebracht und mit dem rieselfähigen Ausgangsmaterial, in der Regel Boden unterschiedlichste Art, trocken vermischt. Durch die trockene Vermischung wird vorteilhaft ein Verkleben der Komponenten und eine vorzeitige Reaktion (z. B. Suspendierung) der Komponenten vermieden.

Ein weiterer Vorteil der innovativen Mischung besteht in der Eignung, nach Wasserzufuhr den jeweiligen rieselfähigen Korngemisch zeitweise fließfähig zu machen und danach gezielt unter Einhaltung technologisch relevanter Eigenschaften wie z. B. Viskosität, Erstarrungsverhalten oder Dichte nach Vorgabe der bautechnischen Anforderungen mit den entsprechenden Eigenschaften rück zu verfestigen.

Die Kristalle der erfindungsgemäßen Schichtmineralien liegen als Agglomerate vor, die nach Dissoziationswiderstand und Korngrößenverteilung Teilchen mit unterschiedlichen Größen und unterschiedlicher Art (z. B. Oberflächenladungen, mineralogische und chemische Zusammensetzungen) enthalten. Durch das, für die jeweiligen Teilchen charakteristische, elektrostatische oder mineralogisch-chemische Verhalten wird die notwendige temporäre Wasserretention für die Phase des fließfähigen Zustandes des verwendeten Korngemenges und die nach einer definierten Zeit erfolgende, dauerhaft stabile Anlagerung des für die zeitweise Fließfähigkeit des Korngemisches benötigten Wassers gesichert.

Dadurch wird die Rückverfestigung des Baustoffes/Bodens bei Erzielung der vorgegebener Eigenschaften auch die notwendige Volumenkonstanz gesichert, die für die Erfüllung der bautechnischen Anforderungen, wie beispielhaft der nötigen Setzungsfreiheit, erforderlich ist.

Durch den Einsatz der innovativen Mischung kann der zeitliche Verlauf der Phasen der Plastifizierung (d. h. der Herstellung zeitweiser Fließfähigkeit) und der Rückverfestigung gezielt gesteuert werden. Dadurch können zugleich wichtige bautechnologische und -physikalische Eigenschaften beeinflusst werden.

Der zeitliche Ablauf der beiden Phasen beim Einsatz der innovativen Mischung (Compound) ist nachfolgend beispielhaft dargestellt:

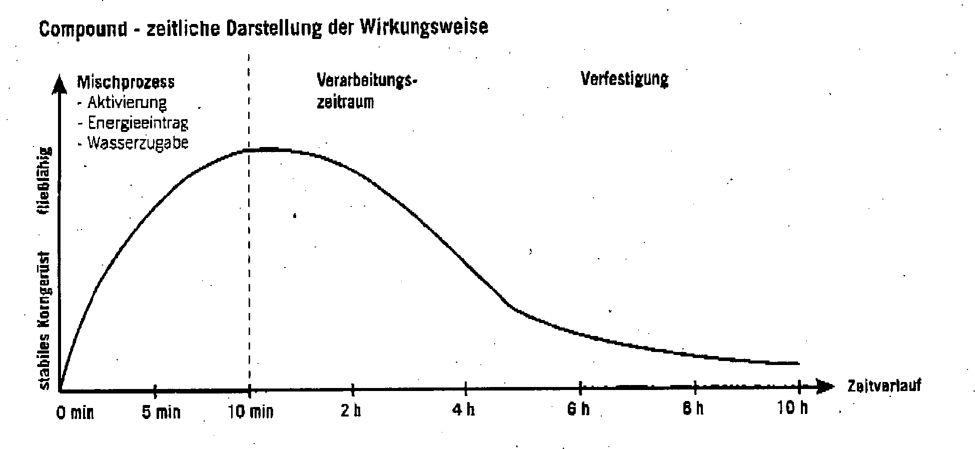

Die erfindungsgemäßen Schichtmineralien sind dabei natürlichen oder auch künstlichen Ursprungs und können als im Bodenaushub vorgefundenes Naturprodukt mit anschließender Optimierung seiner Eigenschaften im Rahmen eines Misch-, Mahl- oder Knetprozesses oder einer thermischen Behandlung ausgesetzt oder als Syntheseprodukt industriell erzeugt und zur Herstellung der Mischung (Compound) verwendet werden. Da mineralische Schichtmineralien nie absolut homogen sind und immer auch zusätzliche und oft auch nicht näher klassifizierbare Inhaltsstoffe enthalten, wird ein Schichtmineral gleichen Ursprungs im Sinne dieser Anmeldung als ein Stoffgemisch verstanden. So wird ein Mineralgemisch mit mindestens 50% Montmorillionit als Bentonit bezeichnet.

Der Mischung (Compound) aus Schichtmineralien kann optional ein beschleunigend auf die Rückverfestigung einwirkendes Material zugegeben werden, das eine kleine Teilmenge an Wasser zu einer (auf Basis der Eigenschaften dieses Beschleunigers einstellbaren Zeit) bereits deutlich vor den Schichtmineralien dauerhaft chemisch bindet und auf diesem Wege den mit Wasser gefüllten Porenräumen des in zeitweise fließfähigen Zustand gebrachten Korngemisches eine kleine, aber dennoch so große Wassermenge entzieht, dass ein Volumenverlust an Wasser in den Porenräumen zu einem Sinken des Poreninnendruckes führt und somit die zeitweise Fließfähigkeit relativ abrupt verloren geh. In der Folge gewinnt das zeitweise fließfähige Ausgangsmaterial/Bodenaushub zu diesem Zeitpunkt sehr schnell an Festigkeit bis hin zur Tragfähigkeit, ohne dass sich feste, starre Strukturen (wie z. B. beim Einsatz hydraulischer Bindemittel oder deren Derivate bzw. Mischprodukte) gebildet haben oder bilden konnten.
Aufgrund der dauerhaft stabilen Bindung der Mehrzahl des für die zeitweise Fließfähigkeit benötigten Wassers in der für die jeweilige Bodenart charakteristischen Menge ist die Mischung aus Schichtmineralien in der Lage, das Korngemisch im Zustand nach dem Verlust der zeitweisen Fließfähigkeit fast schwindungsfrei weiter rückzuverfestigen und seine Endeigenschaften somit auch volumenseitig stabil zu erreichen. Das stellt einen großen Vorteil gegenüber den relativ stark schwindenden Materialien mit bekannter, beispielhaft hydraulischer Rückverfestigungscharakteristik dar, da es dadurch z. B. wesentlich bessere Bettungsbedingungen für Einbauteile, wie Rohre bietet, die durch die bessere Lagerung und damit günstige Lastübertragung viel geringeren Spitzenspannungen ausgesetzt sind, was ihre normative Nutzungsdauer deutlich erhöht.

Ein wesentlicher Vorteil der Mischung aus Schichtmineralien besteht darin, dass man in der Lage ist, Korngemische/Ausgangsstoffe, wie Recyclingmaterialien, Schlacken, Aschen, Schlammrückstände, Sande und Kiese, ebenfalls in einen zeitweise fließfähigen Zustand zu versetzen und anschließend definiert und ohne die geschlossenen, starren Strukturen hydraulischer Bindemittel oder deren Derivate und Mischprodukte wieder rückzuverfestigen.

Mit Hilfe von weiteren Veränderungen der Mischung (des Compounds) und/oder der Zugabe weiterer Materialien mit besonderen Eigenschaften ist man in der Lage, die Mischung so zu beeinflussen, dass die Eigenschaften des rückverfestigtän und vormals zeitweise fließfähig eingestellten Korngemisches gezielt in einer vorher bestimmten Art geändert werden.

Mittels Sonderformen der Mischung (z. B. angepasste Oberflächenladung oder Kationenbelegung), deren Eigenschaften neben der für die Rückverfestigung benötigten dauerhaft stabilen Wasseranlagerung auch auf die Anlagerung von im Boden oder Komgemisch vorkommenden Fremdmaterials mit kontaminierender Wirkung an und/oder in die mineralischen Gitterstrukturen des Compounds ausgerichtet sind, können etwaige Schadstoffe in kontaminierten Ausgangsböden oder -stoffen derart immobilisiert werden, dass die Kontaminationen unwirksam werden und dauerhaft fest gebunden, keine schädigende Wirkung auf den Wirkpfad Boden - Grundwasser mehr entfalten können, ohne dabei in betonähnlich verfestigten Massen, mit ihren Nachteilen, wie beispielhaft späterer Rissentstehung und damit Gefahr der Eluatbildung bei hinzutretendem Wasser, eingebunden sein zu müssen.

Durch die Nutzung eines determinierten, variierten elektrostatischen Bindungsverhaltens der einzelnen Komponenten/Materialien der Mischung (siehe Ausführungsbeispiele) ist erstmals eine gezielte Änderung der bautechnisch relevanten Eigenschaften des rückverfestigten Materials möglich. Ursache dafür ist die temporäre Bindung des Wassers und seine Retention in den Porenräumen des Korngemenges. So liegen die Kristalle der Schichtmineralien als Agglomerate vor, die Teilchen mit unterschiedlichen Größen und unterschiedlicher Art (z. B. Bindungsart der Oberflächenladungen, die der dauerhaft stabilen Bindung in den Strukturen der Schichtmineralien vorausgeht und die Fließfähigkeit als Folge der Wasserwirkung in Form von Gleitschichten auf den Oberflächen der Partikel des Korngemisches zeitweise sichert), mineralogischer und chemischer Zusarnmensetzung) enthalten.
Über das, für die jeweiligen Teilchen charakteristische elektrostatische, mineralogische und chemische Verhalten kann die notwendige temporäre Wasserretention für die Phase des fließfähigen Zustandes des verwendeten Korngemenges und die nach einer definierten Zeit erfolgende dauerhaft stabile Anlagerung des für die zeitweise Fließfähigkeit des Komgemisches benötigten Wassers gesteuert werden, so dass neben der Rückverfestigung und Erreichung vorgegebener Eigenschaften auch eine Volumenkonstanz gesichert wird.

Das Umschlagen von fließfähigem zu plastischem Verhalten der Mischung wird dadurch bewirkt, dass die Mischung mit einem beschleunigend auf die Rückverfestigung einwirkenden Material, das eine kleine Teilmenge an Wasser deutlich vor den Schichtmineralien dauerhaft chemisch bindet und auf diesem Wege den mit Wasser gefüllten Porenräumen eine kleine, aber dennoch so große Wassermenge entzieht, dass ein Volumenverlust an Wasser in den Porenräumen zu einem Sinken des Poreninnendruckes führt und somit die zeitweise Fließfähigkeit relativ abrupt verloren geht.
Die Sicherung der notwendigen Volumenkonstanz der Mischung wird dadurch bewirkt, dass aufgrund der dauerhaft stabilen Bindung der Mehrzahl des für die zeitweise Fließfähigkeit benötigten Wassers in der für die jeweilige Bodenart charakteristischen Menge die Mischung in der Lage ist, das Komgemisch im Zustand nach dem Verlust der zeitweisen Fließfähigkeit fast schwingungsfrei weiter rückzuverfestigen und seine Endeigenschaften somit auch volumenseitig stabil zu erreichen.

Die Erfindung wird nachfolgend anhand dreier Ausführungsbeispiele und zugehöriger Figuren näher dargestellt:

### Ausführungsbeispiel 1:

Mischung (Compound) für den Einsatz mit Bodenaushub, bestehend aus ca. 80 % Blauton und ca. 20 % huminer Anteile:
Der Baustoff soll nach der Phase der zeitweisen Fließfähigkeit mit den gleichen bodenmechanisch relevanten Eigenschaften rückverfestigen soll, die er vor seinem Aushub besaß.
Dadurch soll gesichert werden, dass der mit dem zeitweise fließfähigen Material verfüllte Bereich bodenmechanisch keine anderen Eigenschaften aufweist, wie der Bereich mit dem unangetasteten, natürlich gewachsenem Boden (Tragfähigkeit, Kompressibilität, Schwingungsverhalten, Wasserdurchlässigkeit).

Eingesetzt wird eine Mischung (Compound) aus zwei verschiedenen Schichtmineralien (A) und (B) im Verhältnis 2 : 3 mit einer künstlich durch thermische und mechanische Energiezufuhr veränderten Charakteristik eines der Bestandteile, der in der Mischung eingesetzten Schichtsilikate in der Menge von 35 kg Mischung (Compound) je m³ des zeitweise fließfähigen Korngemisches:

(Die Zusammensetzung der beispielhaft eingesetzten Schichtsilikate in den Ausführungsbeispielen 1 bis 3 ist in den zugehörigen Ankagen 1 bis 6 dargelegt).
- Schichtsilikat A: siehe Anlagen 1 - 3
- Schichtsilikat B: siehe Anlagen 4 - 6

### Ausführungsbeispiel 2:

Mischung (Compound) für den Einsatz mit Bodenaushub als Verfüllbaustoff bei sandigen, schluffigen Böden:

Der rückverfestigte Baustoff soll eine hohen Sperrwirkung gegen Wasser und zusätzlich einer dämpfenden Wirkung als Schutz gegen Schwingungseinträge in eine zu schützende Bausubstanz aufweisen.

Eingesetzt wird eine Mischung (Compound) aus drei unterschiedlichen Schichtmineralien A, B, C im Verhältnis 1:1:1 zueinander mit einer künstlich durch thermische und mechanische Energiezufuhr veränderten Charakteristik eines der Bestandteile der Gesamtmenge von 47 kg Mischung (Compound) je m³ des zeitweise fließfähigen Korngemisches:
- Schichtsilikat A: siehe Anlagen 1 - 3
- Schichtsilikat B: siehe Anlagen 4 - 6
- Schichtsilikat C: Standardbentonit (z. B. Calcigel)

Als optionale Zusatzkomponente D wird 10 % Kalksteinmehl, bezogen auf die Gesamtmasse des fließfähigen Materials mit einer Korngröße kleiner 0,1 mm zugesetzt, um die Wasserdurchlässigkeit zu verringern und/oder die Dichte zu erhöhen, um so das Schwingungsverhalten zu verbessern.

### Ausführungsbeispiel 3:

Mischung (Compound) für den Einsatz als Verfüllbaustoff bei stark lehmigem Aushubmaterial ohne humine Einschlüsse:

Die wichtigen physikalischen Eigenschaften des rückverfestigten Baustoffes (Plastizität, Quellverhalten) sollen denen des natürlich gewachsenen Materials vor dem Aushub wieder entsprechen.

Eingesetzt wird eine Mischung (Compound) aus einem Schichtmineralien einer Lagerstätte, deren Komponenten künstlich durch thermische und mechanische Eenergiezufuhr (Aktivierung, Trocknung, Vermahlung) unterschiedlich veränderten wurden.
Eingesetzt wird eine Menge von 32 kg Mischung (Compound) je m³ des zeitweise fließfähigen Korngemisches:
- Schichtsilikat B: siehe Anlagen 4 -6

| **Schichtsilikat B: Mischung/Compound 0021 (siehe Anlagen 4 - 6):** | |
|---|---|
| Komponente 1 | Komponente 2 |
| Bewirkt die Wasserretension bei Wasserzugabe zur Generierung eines fließfähigen Gemenges durch schnelle Wasseranlagerung an Schichtsilikate | Bewirkt mit zeitlicher Verzögerng die Rückverfestigung / Stabilisierung des Korngerüsts durch verzögerte, dauerhafte Wasseranlagerungen an Schichtsilikate. |
| Kleine Agglomerate der Schichtkristalle dissozieiren schnell und stellen während des Mischprozesses genügend aktive Oberfläche zur Verfügung | Größere Agglomerate der Schichtkristalle stellen durch langsame Dissoziation die aktive Oberfäche zeitverzögert zur Verfügung. |
| Material: | Material: |
| Na- aktivierter Montmorillionit | Na-akjtivierter Montmorillonit |
| Größe der Agglomerate: | Größe der Agglomerate: |
| 0-2µm | 2- 70µm |
| Anteil im Compound: | Anteil im Compound: |
| Ca. 2-15% | Ca. 98-85% |
| Aktivierte Natriummontmorillionite haben den Vorteil der leichten Verfügbarkeit und eines variablen Herstellprozesses um die Endeigenschaften zu beeinflussen. | |

| **Schichtsilikat A: Mischung/Compond 0014 siehe (Anlagen 1 - 3):** | |
|---|---|
| Wirkung der Komponenten wie Beispiel 1, allerdings wird die Zeitversetze Wasseraufnahme nicht ausschließlich durch unterschiedliche Größe der Agglomerate sonder vor allem durch verschieden leicht zu dissoziierende Rohstoffe (genesebedingt). | |
| | |

| Material1: | Material2: |
|---|---|
| | |
| Natriumbentonit | Natriumbentonit, Lagerstätte vorkonsolidiert |
| (Herkunft Wyommg, USA) | (Herkunft: Gujarat, Indien) |
| Agglomerate: | Größe der Agglomerate: |
| 0-70µm | 0- 70µm |
| | |
| Anteil im Compound: | Anteil im Compound: |
| Ca. 40% | Ca.60 % |
| Natriumbentonite haben den Vorteil einer großen Toleranz gegen Kontaminationen (z.B. hu- mine Bodenbestandteile). | |

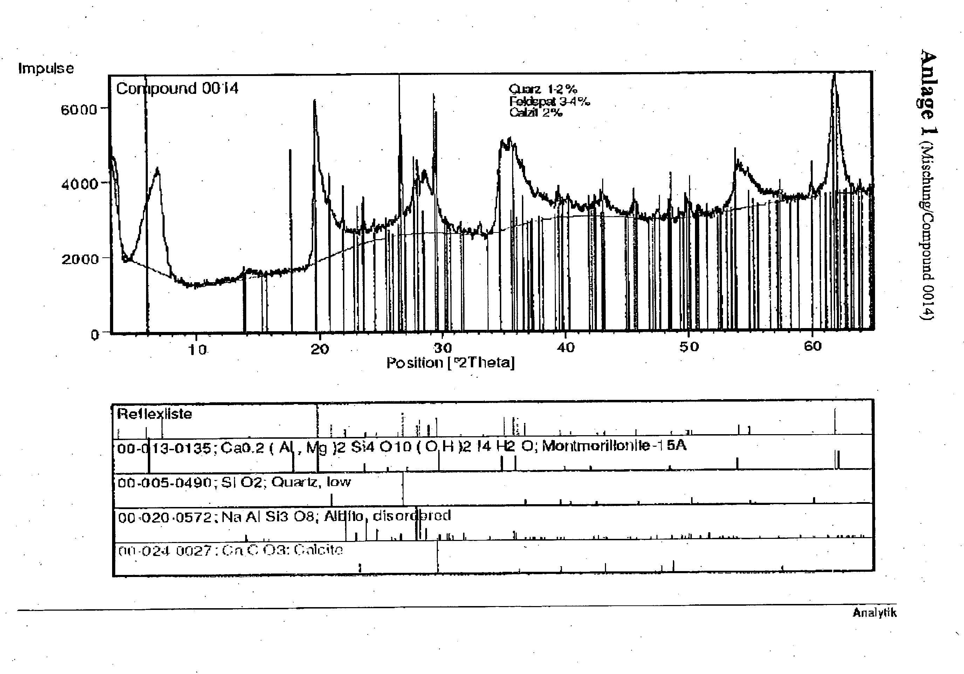

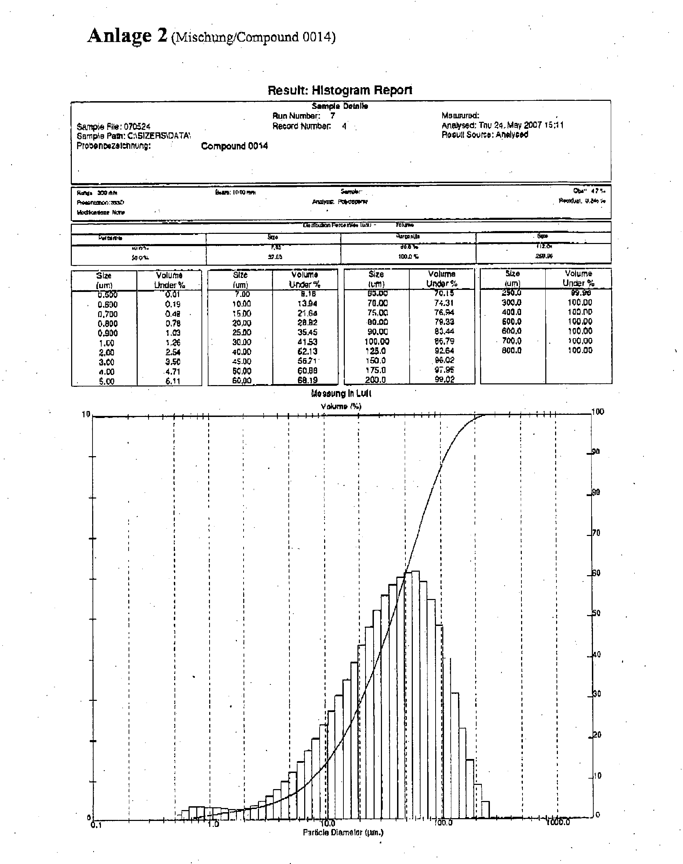

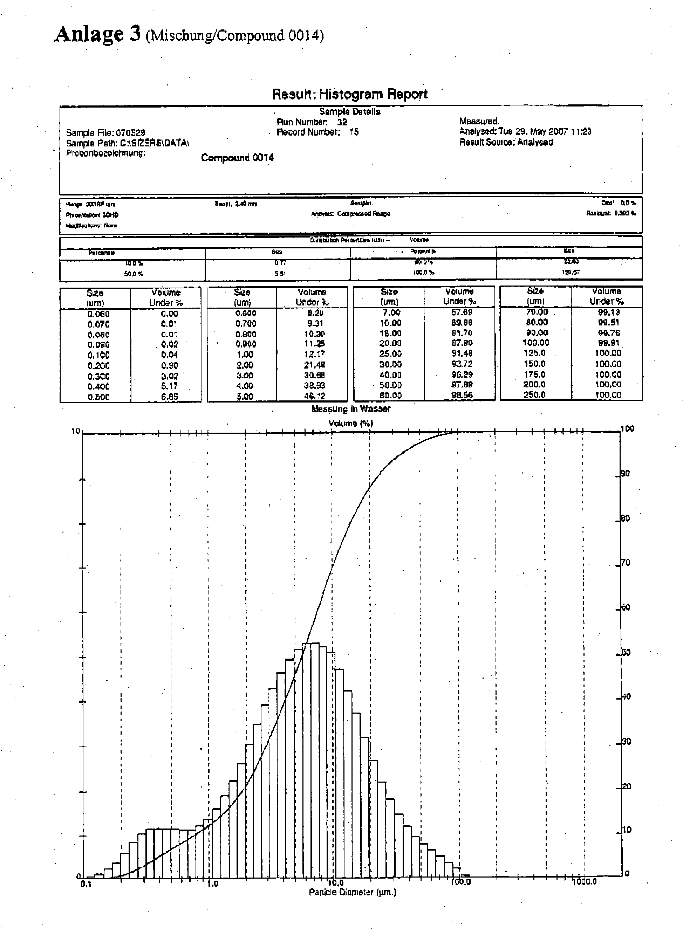

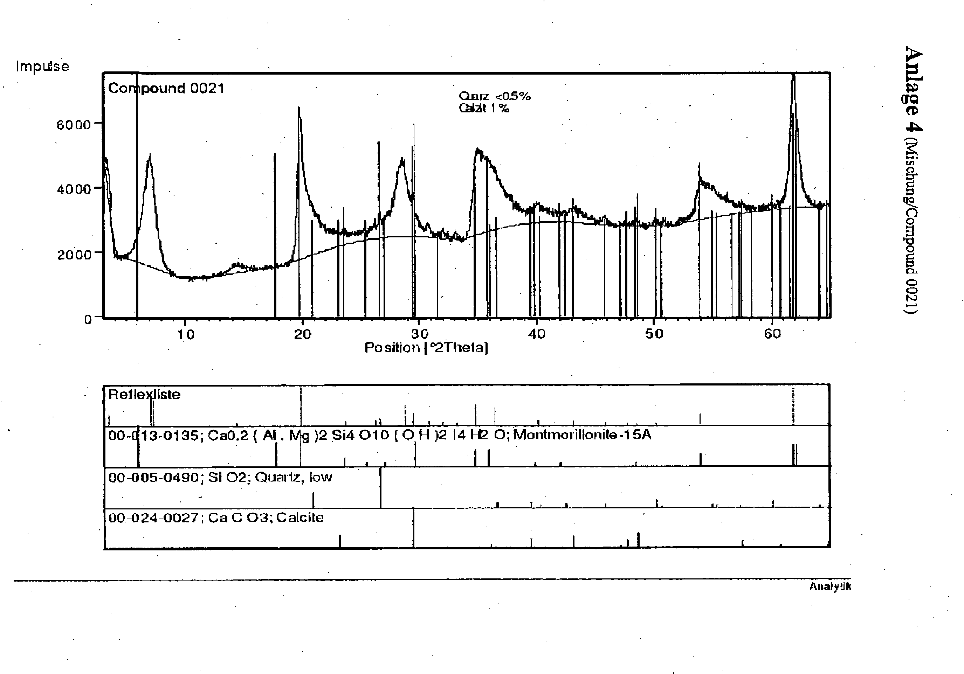

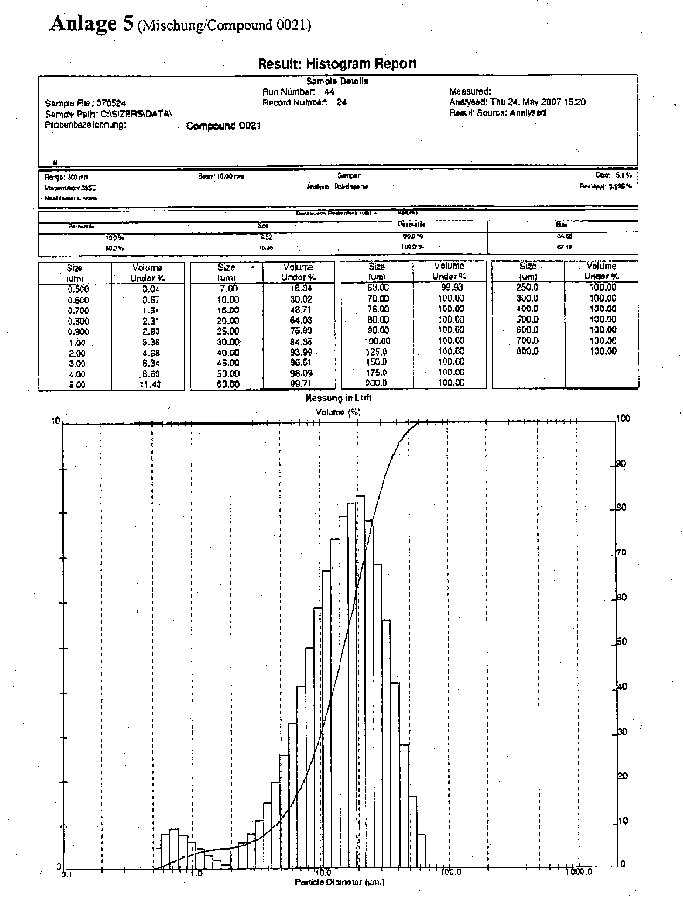

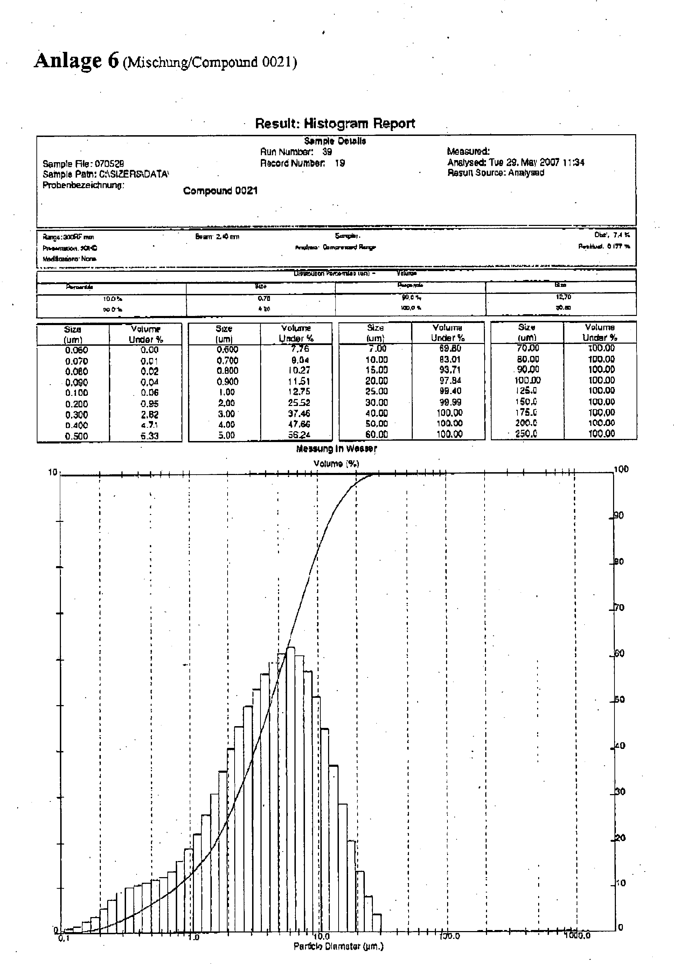

## Patentansprüche

1. Mischung (Compound), bestehend aus einem oder mehreren künstlich hergestellten oder natürlich vorkommenden Schichtmineralien für eine dauerhaft stabile Wasseranlagerung an die Strukturen dieser Schichtmineralien zur Rückverfestigung von Baustoffen, insbesondere Bodenaushub, wobei die zunächst in den Zustand einer zeitweisen Fließfähigkeit künstlich versetzt werden, ohne dass diese Rückverfestigung einen relevanten Einfluss durch veränderte äußere Bedingungen oder Inhaltsstoffe des Korngemisches, des Zugabewassers oder der Bedingungen am Einbauort auf ungewollte Veränderungen der Endeigenschaften des rückverfestigten Materials hat und welches in der Lage ist, die notwendige temporäre Wasserretention für die Phase des fließfähigen Zustandes des verwendeten Komgemenges bewirkt, wobei die nach einer definierten Zeit erfolgende dauerhaft stabile Anlagerung des für die zeitweise Fließfähigkeit des Komgemisches benötigten Wassers so zu sichern, dass die bautechnisch relevanten physikalischen Eigenschaften des rückverfestigten Materials derart wiederentstehen, dass sie denen des fließfähig gemachten Korngemisches weitgehend entsprechen bis gleichen oder auch gezielt, je nach Anwendungsart, in bestimmten Grenzen durch Nutzung eines anderen und determiniert variierten elektrostatischen Bindungsverhaltens verändert werden können.

2. Mischung nach Anspruch 1, **dadurch gekennzeichnet, dass** die Mischung ausschließlich aus natürlich vorkommenden Schichtmineralien besteht.

3. Mischung nach Anspruch 2, **dadurch gekennzeichnet, dass** als natürlich vorkommende Schichtmineralien Bentonite, Attapulgite, Paligorskite oder Illite verwendet werden.

4. Verfahren zur Herstellung einer Mischung nach Anspruch 2 oder 3, **dadurch gekennzeichnet, dass** die Schichtmineralien durch Eintrag von Knetenergie aufbereitet werden und nachfolgend unter Zugabe von Soda eine Natrium- oder Lithium-Aktivierung erfahren.

5. Mischung nach einem der Ansprüche 1 bis 3, **dadurch gekennzeichnet, dass** Schichtmineralien ausschließlich eines einzigen natürlichen Ursprungs verwendet werden.

6. Mischung nach einem der vorherigen Ansprüche, **dadurch gekennzeichnet, dass** Schichtmineralien unterschiedlichen natürlichen Ursprungs verwendet werden.

7. Mischung nach Anspruch 1, **dadurch gekennzeichnet, dass** ausschließlich synthetisch hergestellte Schichtmineralien verwendet werden.

8. Mischung nach Anspruch 1 oder 7, **dadurch gekennzeichnet, dass** ausschließlich eine einzige Art synthetisch hergestellter Schichtmineralien verwendet wird.

9. Mischung nach Anspruch 1 und 7, **dadurch gekennzeichnet, dass** es mehrere Arten verschiedener synthetisch hergestellter Schichtmineralien verwendet werden.

10. Mischung nach einem der vorherigen Ansprüche, **dadurch gekennzeichnet, dass** ein Gemisch aus natürlichen und synthetischen Schichtmineralien verwendet wird.

11. Mischung nach einem der vorherigen Ansprüche, **dadurch gekennzeichnet, dass** der Mischung ein umweltunbedenkliches Material als Katalysator zugesetzt wird.

12. Mischung nach einem der vorherigen Ansprüche, **dadurch gekennzeichnet, dass** der Mischung mindestens ein umweltunbedenkliches Material zugegeben wird, das eine oder mehrere bautechnisch relevante, physikalische Eigenschaften gezielt verändert.

13. Mischung nach Anspruch 11 oder 12, **dadurch gekennzeichnet, dass** der Mischung mindestens ein Katalysator und ein umweltunbedenkliches Material zugegeben wird.

14. Verfahren zur Herstellung der Mischung nach einem der vorherigen Ansprüche, **dadurch gekennzeichnet, dass** die Mischung in einem Prozess der Verarbeitung rieselfähiger Korngemische eingebracht und mit dem rieselfähigen Ausgangsmaterial trocken vermischt wird.

15. Verwendung einer Mischung nach einem der vorherigen Ansprüche zur die Herstellung eines zeitweise fließfähig eingestellten Baustoffs für den Einsatz im Tiefbau, insbesondere für die Verfüllung von Rohrleitungsgräben und Kanälen, im Wasserbau und/oder bei der Sanierung von Dämmen und Deichen.
